# EUROPEAN PATENT SPECIFICATION

(11) **EP 0 836 920 B1**
(45) Date of publication and mention of the grant of the patent: **02.01.2004**
(21) Application number: 97117832.2
(22) Date of filing: 15.10.1997
(51) Int. Cl.: B28D 1/04

(54) **Mobile portal-frame machine for cutting blocks of granite, marble and stone in general, and relative plant**
Maschine in Portalbauweise zum Schneiden von Blöcken aus Granit, Marmor und Stein oder dgl., und Anlage
Machine de coupe à portique pour couper des blocs de granit, de marbre et de pierre et similaires, et installation

(30) Priority: 21.10.1996 IT MO960136
(43) Date of publication of application: 22.04.1998
(73) Proprietor: Pedrini, Luigi, 24060 Carobbio Degli Angeli (Bergamo) (IT)
(72) Inventor: Pedrini, Luigi, 24060 Carobbio Degli Angeli (Bergamo) (IT)
(74) Representative: Spera, Maria Caterina

(56) References cited:
- EP-A- 0 578 217
- EP-A- 0 686 466
- DE-A- 4 206 274
- FR-A- 2 706 348
- IT-B- 1 147 547
- US-A- 3 634 975

## Description

The invention relates to: a mobile portal-frame machine for cutting blocks of granite, marble and stone in general, that is, a machine with multiple disks stacked on a horizontal shaft, capable of cutting granite blocks into thin strips, named slices, the length of the block, having a mobile portal-frame structure to position it on the block; the plant concerns the way in which several identical or complementary machines can be set up so as to optimise the process of cutting and detaching said slices.

The state of the art comprises: the usual block-cutting machines for cutting slices in successive runs and at gradually increasing depth until the desired depth is reached ( equal to the width of the slice). It also comprises : machines for the trimming, or preliminary facing, of the block, which, without making use of the principal block-cutter, smooth the top surface of the block before the slices are cut and which also detach the slices at the base, after completion of the cut of a layer, by means of one or more diamond disks mounted on mandrels with vertical axis.

Prior art also comprises: machines with two or four columns, that is, two different modes of machine construction that allow for two different ways of cutting the block. The machines with four columns move the carriage with the stack of disks onto the block, by means of a trolley with orthogonal motion, while said block is positioned in a stable manner on the ground or on a mobile trolley in fixed position, until the completion of the cutting of a layer. The machines with two columns, on the other hand, involve the block being placed on a surface mobile transversally to columns and sliding on runners with high-precision control mechanisms.

Prior art also includes the patent application EP A 0 578 217 which describes in accordance with the preamble of claim 1 a bridge-and-table milling machine for machining stone-like materials, comprising first guide rails secured to the foundation, a mobile portal frame running on said guide rails, screw devices for moving the portal frame along said guide rails, a carriage carrying a cutting tool and movable transverse to the direction of said guide rails and a table carrying the stone block to be machined; the table rotatable angularly on a vertical axis in the middle of the working area of that tool. However the block to be machined is a very small block as it must be mounted on said table and the structure of the cutting tool assembly is able to displace the tool, i.e. a single cutting disk, with both horizontal and vertical rotation axis. Thus the described milling machine is able to cut a single groove each working run into the block and it is not able to displace the portal frame vertically to allow the best positioning of the cutting tool in respect to the reaction cutting forces.

While the prior art mode of cutting may be acceptable for limited production, it is not economical for mass production, in that the block-cutter and trimmer have to be supervised by the operator whose job it is to see that the block is correctly positioned for cutting, either on the trolley or on the mobile surface, and to monitor the moving of the block by the machine.

Prior art also comprises: a plant for cutting granite and hard stone consisting of two machines working side by side in an area with two pairs of rails, on which said trolleys with the blocks run parallel to each other across the work-space of the first machine to reach that of the second. However, the arrangement of two pairs of rails with trolleys working side by side in the same area does not enable the two operations to be separated: work has to stop on one machine to move the trolleys to and from the other.

The aforesaid machines and plant cannot function without the presence of the operator, even if he does not intervene but only monitors the operation: the rate of work, given the great numbers of disks being used contemporaneously, and the consequent reduction in the time taken to cut a layer of slices, means that the operator has to intervene to move the block from the work area or to monitor the detaching of the slices.

Therefore it is not possible to line up a number of blocks for trimming, or to cut or detach the slices of a layer, without the presence of an operator, for example at night, when the operations that consume a lot of electrical power can run at reduced tariffs.

As a result, anybody wanting to exploit the production capacity of modern machines and take advantage of nighttime electricity tariffs is obligated to purchase several machines and start them at the end of the evening shift, and is thereby unable to take advantage of the whole period of reduced tariff or unable to exploit modern multi-disk machines with their enhanced output.

Finally, prior art comprises: sliding portal-frame block-cutting machines either with a single disk cutting transversally to the guide rails, for trimming or cutting large blocks, or with multiple disks cutting longitudinally to the guide rails. These machines are not versatile or flexible: the single-disk type inevitably has a low output, while the multi-disk type has to be able to travel under load, that is, during cutting, so that the structure of the machine and the guidelines is extremely complicated and costly.

The state of the art can be considerably improved to make better use of the operators' daytime working hours and also to take advantage of cut-rate electricity, which is only available at night.

From the foregoing emerges the need to solve the technical problem of how to make the individual block-cutting or trimming machine more flexible, without loss of productive capacity, by eliminating the need for the operators' supervision in the change-over of the block, that is, by finding a configuration of the transverse guide-rails of the mobile portal that ensures precise positioning and allows for cutting transversally to said guide-rails, and is at the same time robust and economical.

The present invention solves the above-mentioned technical problem by adopting: a machine for cutting blocks of granite, marble and stone in general, comprising first horizontal guide rails secured to the foundation, a mobile portal frame running on said guide rails, a device for moving it along the rails, a carriage carrying a cutting tool and movable transverse to the direction of said guide rails, characterised by an assembly of multiple diamond disks, by at least two braking devices for braking said portal frame on said guide-rails, by two vertical columns mounted on the portal fame and having second vertical guide rails, and by a bridge the ends of which are adapted to vertically travel along said second guide rails, whereby said carriage is adapted to travel along said bridge.

In a preferred embodiment, the first guide rails have prismatic guides for vertical and transverse positioning only on one of the guides.

In another preferred embodiment, the invention shows the sliding elements supporting the mobile portal on said guide rails with an anti-friction lamina.

In another preferred embodiment, the invention shows said horizontal guide-rails enclosed in two U-shaped guards, the lower of which is firmly anchored to the relative guide-rail and to a corresponding supporting beam.

In another preferred embodiment, the invention shows inside the lower guard, an oil bath for lubricating and protecting the guide-rail and the supports.

In another preferred embodiment, the invention shows transversal positioning achieved by means of revolving pins bearing on the sides of said one of the guide-rails.

In another preferred embodiment, the invention shows a longitudinal reinforcing plate, between the guide rail and the relative supporting beam, to which is firmly anchored a rack meshing with at least one reduction gear, of said traversing device, on each side of the mobile portal frame.

In another preferred embodiment, the invention shows the braking devices acting on the sides of the said rack.

In another preferred embodiment, the invention shows four braking devices located close to the supports of said mobile portal frame.

In another preferred embodiment, the invention shows said braking devices consisting of cylinders on the stems of which are disks that clamp the sides of the rack.

In another preferred embodiment, the invention shows said beams supporting the guide rails being in box-section sheet steel, resting on plinths or on a reinforced concrete wall.

In another preferred embodiment, the invention shows a lead screw on the two columns for moving the bridge on the vertical guide rails; said guide rails being adjustable on one side only.

In another preferred embodiment, the invention shows the mobile portal frame consisting of two side elements in box-section steel, joined, close to the supports, by a tubular body supporting the vertical columns.

In another preferred embodiment, the invention shows the assembly of disks on a horizontal axis for cutting the slices vertically and in depth.

In another preferred embodiment, the invention shows the assembly of disks on a horizontal axis of gradually increasing diameter from a minimum to a maximum for cutting vertically the top-side scrap material and having a vertical-axis mandrel, with one or more horizontal cutting disks, for cutting off said scraps or said slices at the base.

The advantages offered by the present invention are: the mobile portal-frame block-cutters or trimmers can move in a pre-set manner along the work area delimited by the guide-rails and stop on the block to be cut with the phase required by each one; the operation can proceed without the assistance of the operator, thereby taking advantage of the cut-tariff period and without incurring the cost of night-shift personnel. The mobile portal-frame block-cutter can work with multiple-disk assemblies without stopping at the end of cutting a layer of slices on a block, being able to reposition itself on a different block and continue cutting automatically. The mobile portal-frame trimmer can therefore divide its work between blocks that need preliminary dressing and those that have a layer of ready-cut slices waiting to be removed. This, if a plant is set up with several mobile portal-frame block-cutters and trimmers on the same guide-rails, advantageously connected, maximum flexibility is achieved: the only limitation to the size of the plant is the length of the area available.

An embodiment of the invention is shown, purely by way of example, in the seven tables of drawings attached, in which Figure 1 is the perspective view of the mobile portal-frame block-cutter described; Figure 2 is a perspective view similar to the previous one of a mobile portal-frame trimmer; Figure 3 is the longitudinal view of the mobile portal-frame structure of the block-cutter with partial sections on the guide-rails and one of the columns; Figure 4 is the plan view of the block-cutter; Figure 5 is the schematic representation of the plant consisting of a mobile portal-frame block-cutter and trimmer; Figure 6 is the partial section of the guide-rail with support and transversal positioning; Figure 7 is a section similar to the previous one but only of the supporting guide-rail of the mobile portal; Figures 8 and 9 are the sections on a horizontal plane of the mobile columns of the mobile portal.

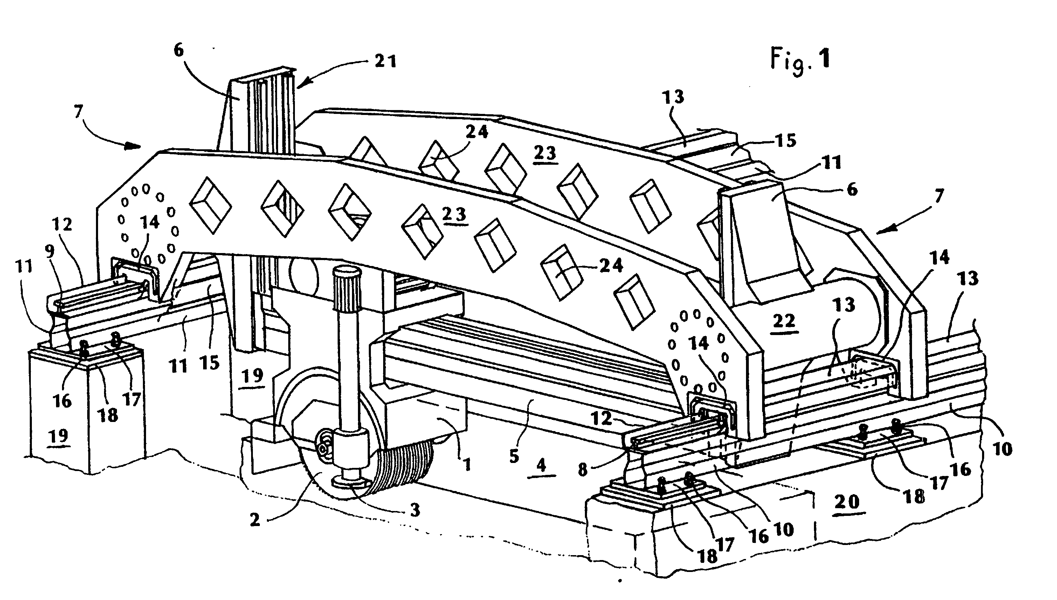

The figures show: 1, Figure 1, the cutting carriage with the assembly 2 of disks on a horizontal axis; 3, the disk for cutting the base of the slices, for use by an operator who does not possess a dedicated machine or who wants to carry out the operation directly with the block-cutter; 4, the block to be cut; 5, the bridge along which the carriage 1 travels; 6, the mobile columns positioned inside the mobile portal 7, on guide-rails 8, which support and locate transversally, and 9, which only support, each resting on the respective longitudinal beam 10 and 11; 12, the lower U-shaped guard of the respective guide-rail; 13, the upper inverted U-shaped guard housed in the corresponding aperture 14 of the supports of the mobile portal 7; 15, an internal guard for additional protection; 16, the retaining bolts of plate 17, rigidly connected to said beams and adjustable on plate 18 resting on plinth 19 or on the wall in reinforced concrete 20; 21, the vertical guide-rails of bridge 5 mounted on said mobile columns 6; 22, the tubular body joining said columns to the sides of the mobile portal; 24, holes to reduce the weight of the side structures.

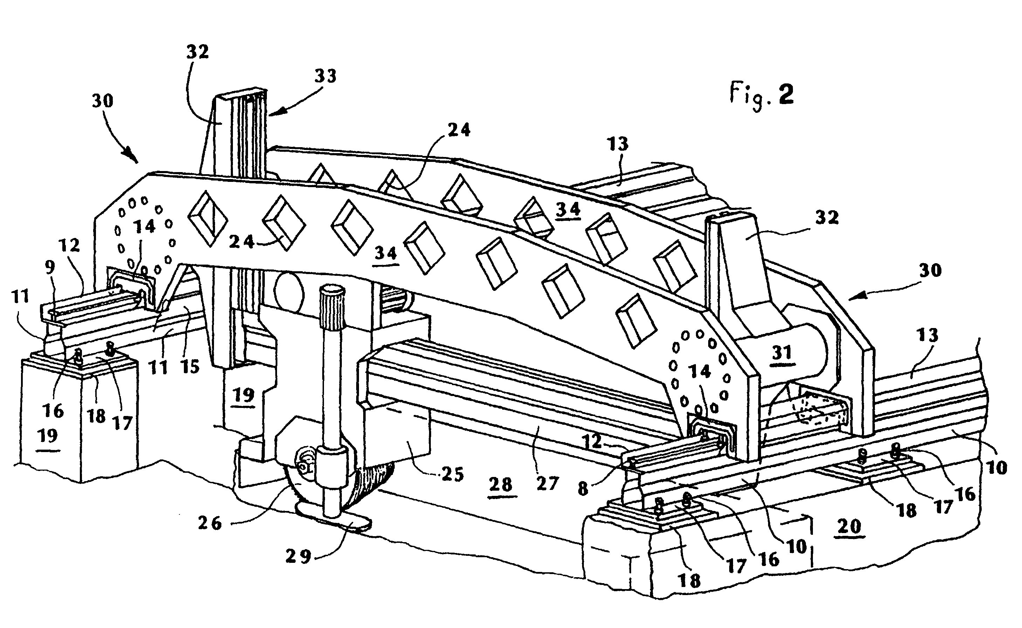

The figures also show: 25, Figure 2, the sliding carriage, carrying the assembly of disks of increasing diameter 26, on the bridge 27 of the trimmer; 28, the block to be cut; 29, the disks for cutting the base of the slices or the trimming scrap; 30, the mobile portal of the trimmer within which, supported by tubular bodies 31, are two mobile vertical columns 32, having guide-rails 33, in which travel the ends of bridge 27; 34, the sides of the mobile portal of the trimmer lightened and joined by said tubular bodies 31.

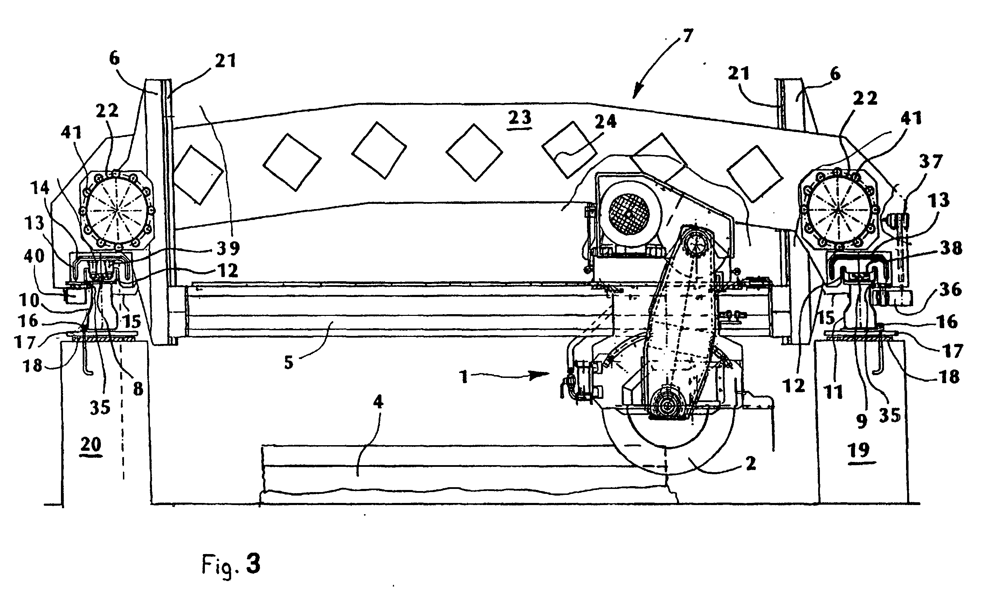

The figures also show: 35, Figure 3, the rack, fixed to beams 10 and 11, on which mesh the gear wheels of the reducing gears 36 driven synchronously by the transmission of motion with bevel gears 37; 38, the cheeks of the support on guide-rails 8 and 9; 39, the revolving pins bearing on the sides of guide-rails 8 of transverse location; 40, one of the units braking the mobile portal in the desired position by clamping the sides of said rack; 41, the bolt-holes for bolting the sides of the mobile portal to the tubular connecting body.

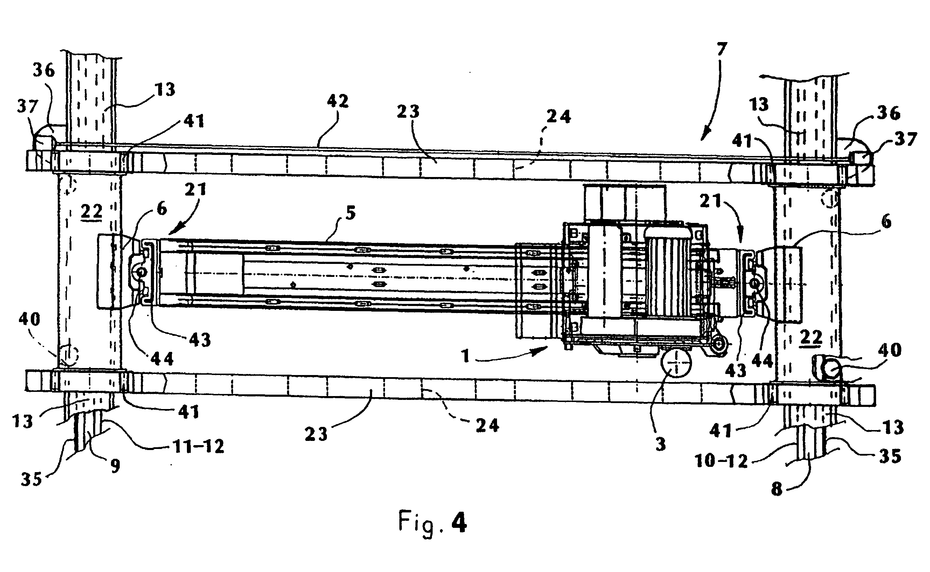

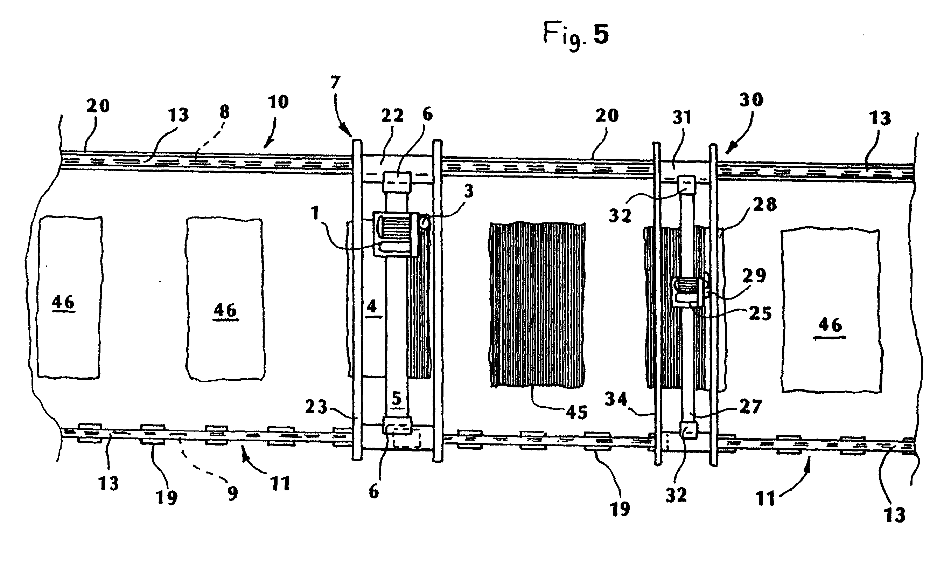

The figures also show: 42, Figure 4, the axle for synchronising the transmission of transverse motion; 43, the U-shaped guard of the vertical guide-rails 21 and, 44, the motion control screw; 45, Figure 5, a block with a layer of slices completely cut and ready to be cut at the base; 46, other blocks waiting to be cut.

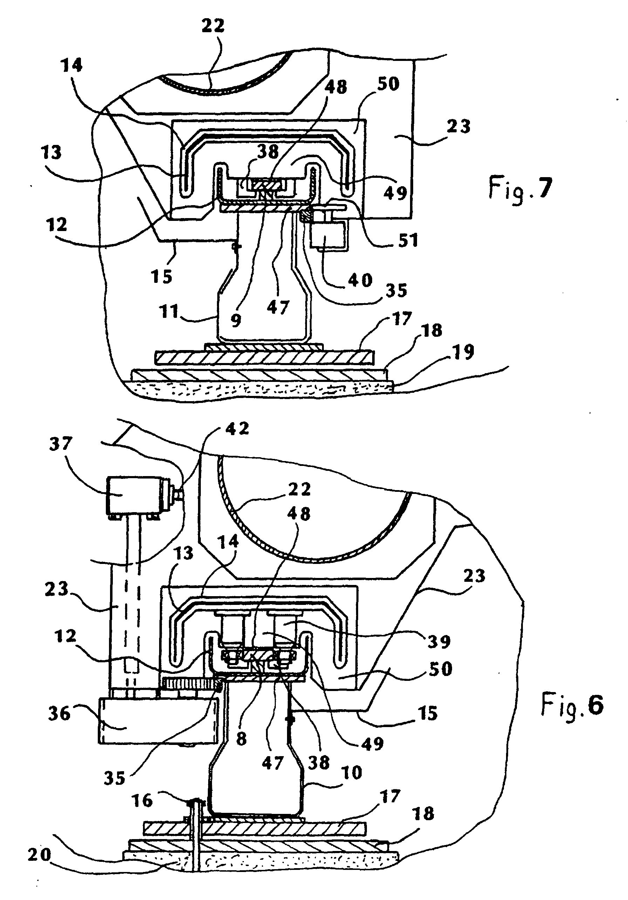

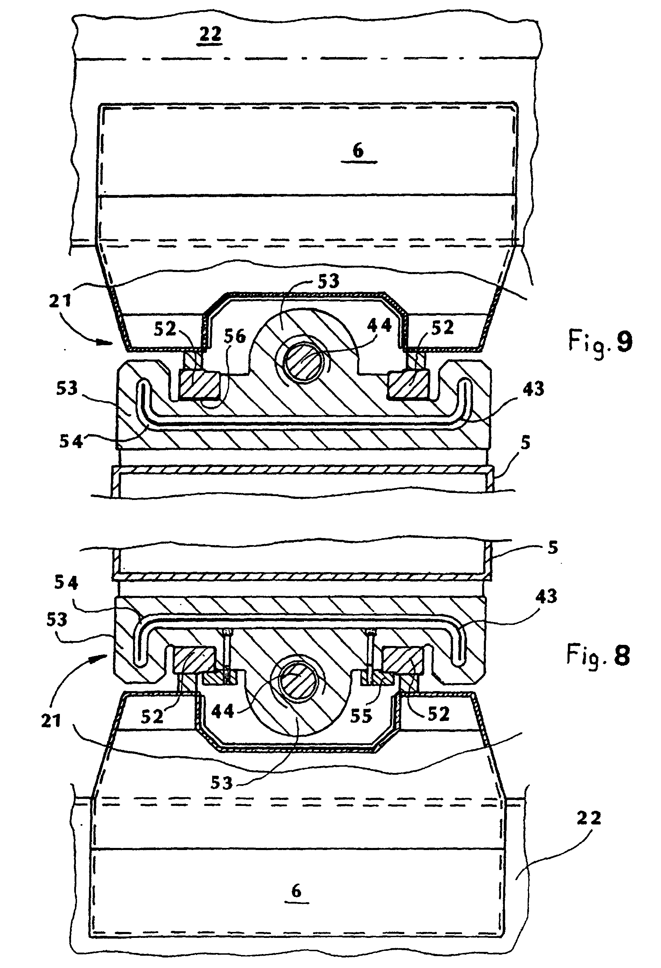

The figures also show: 47, Figure 6, the longitudinal reinforcing plate of the guide-rail to which said rack 35 is fixed; 48, an anti-friction bearing between the guide-rail and support 49 of the mobile portal; 50, the supporting block of the mobile portal from which are fashioned aperture 14 and support 49, to which revolving pins 39 are fixed; 51, Figure 7, the brake disk bearing on the sides of the rack.

The figures finally show: 52, Figure 8, the prisms of the vertical guide-rails 21, wherein slide the ends of bridge 5, in the aperture 54 of which slides said guard 43: said prisms guide the ends of bridge 5 longitudinally to guide-rails 8,9, while transversally a single pair, on the side of guide-rail 8, is adjusted by means of gibs 55; on the side of guide-rail 9, on the other hand, a small amount of play 56 is maintained in a transverse direction.

Without repeating the known phases of the state of the art, the functioning of the block-cutter or trimmer is as follows.

The blocks to be cut 46 are placed between the guide-rails 8,9 of the mobile portal-frame machines by any appropriate means: a mobile crane, trolleys or, more advantageously a mobile portal crane that covers the area occupied by the plant and a corridor adjacent to it; the block is placed at a predetermined point of the work area and is not moved from there until cutting has been completed; this phase can be carried out during the daytime, as can the subsequent phase of trimming, which does not require large amounts of electricity.

The blocks, lined up as in Figure 5, are cut by moving the relative machine over them: the trimmer, with mobile portal 30, works on block 28, while the block-cutter, with mobile portal 7, works on block 4. Said bridges run along guide-rails 8, 9 by the amount necessary to pass to the next phases, the sliding of support 49 being facilitated by the anti-friction bearing 48; guide-rail 8 maintains the alignment of the mobile portal with the contact on its sides of the revolving pins 39; on the opposite side of the mobile portal, guide-rail 9 maintains the planarity of the mobile portal, with respect to guide-rail 8, by preventing movement in a vertical direction, but allows the play, seen in Figure 7, between the cheeks 38 and the sides of said guide-rail 9.

Motion is imparted to the mobile portal 7, 30 by the meshing of reduction gear 36 with rack 35, which is firmly mounted on reinforcement 47 of said guide-rails, by means of transmission 37, 42 from a motor reducer of known type.

When the desired position is reached, as controlled by precision electronic equipment mounted on rack 35 or on reduction gearwheel 36 coupled to said rack, braking elements 40, 51 clamp the sides of the rack, thereby firmly blocking mobile portal 7, 30 on guide-rails 8,9, which are in turn firmly anchored to the ground with retaining devices 16, 17 and 18 on plinths 19 or on wall 20 in reinforced concrete.

When the slices have been cut off at the base, they can be off-loaded from above using a device of known type, fixed to the mobile portal-frame block-cutter or trimmer or to another mobile portal designated for that purpose.

The plant can advantageously consist of several block-cutters and trimmers, interconnected, so as to enable the two types of machine to work together in tandem, each fulfilling its function, without causing obstructions, given the impossibility of reciprocal overlap, and allowing the fullest use to be made of the block-cutters, which represent the major investment and are at the same time the overriding factor affecting production, as regards both time and cost.

Finally, the plant may comprise at least a block-cutter, a trimmer and an off-loading device working in the same work area; the blocks can be moved on trolleys running on rails which enter the work area longitudinally.

In practice the materials, dimensions and operative details could be different from those indicated, but technically equivalent, the patent will still apply.

Thus, even though less advantageously, the number of braking units 40, 51 can be reduced to two, one of each guide-rail, and be actuated mechanically, pneumatically or electrically.

The structure of the mobile portal both of the block-cutter and of the trimmer can be in the form of a trestle or other, and also with a single beam.

The foundations on which beams 10, 11 supporting guide-rails 8,9 rest may consist only of plinths 19 or walls 20 at either end.

## Claims

1. Machine for cutting blocks of granite, marble and stone in general, comprising first horizontal guide rails (8, 9) secured to the foundation, a mobile portal frame (7; 30) running on said guide rails, a device (36, 37) for moving it along the rails, a carriage (1; 25) carrying a cutting tool and movable transverse to the direction of said guide rails, **characterised by** an assembly of multiple diamond disks (2; 26), the direction of cut of which is transverse to that of the first guide rails, by at least two braking devices (40) for braking said portal frame on said guide rails, by two vertical columns (6; 32) mounted on the portal frame and having second vertical guide rails (21; 33), and by a bridge (5; 27) the ends of which are adapted to vertically travel along said second guide rails, whereby said carriage is adapted to travel along said bridge.

2. Machine for cutting blocks of granite, as claimed in the previous claim, **characterised in that** the first guide rails (8, 9) have prismatic guides for vertical positioning and for transverse positioning only on one (8) of these.

3. Machine for cutting blocks of granite, as claimed in the previous claim, **characterised in that** it has sliding elements (38; 49) supporting the mobile portal frame (7; 30) on the guides with an anti-friction lamina (48).

4. Machine for cutting blocks of granite, as claimed in the previous claim, **characterised in that** said horizontal guide rails (8; 9) are enclosed in two U-shaped guards, the lower of one (12) being securely anchored to the relative guide rail and to a corresponding supporting beam (10; 11).

5. Machine for cutting blocks of granite, as claimed in the previous claim, **characterised in that** inside the lower guard (12) there is an oil bath for lubricating and protecting the guide-rail and the supports (38; 49).

6. Machine for cutting blocks of granite, as claimed in one claims 2, 3, **characterised in that** transverse positioning is achieved by means of revolving pins (39) bearing on the sides of said one (8) of the guide rails (8, 9).

7. Machine for cutting blocks of granite, as claimed in claim 4, **characterised in that** it has a longitudinal reinforcing plate (47), between the guide rail and the relative supporting beam (10; 11), to which is firmly anchored a rack (35) meshing with at least one reduction gear (36) of the said traversing device, on each side of said mobile portal frame (7; 30).

8. Machine for cutting blocks of granite, as claimed in the previous claim, **characterised in that** said braking devices (40) are arranged to act on the sides of the said rack (35).

9. Machine for cutting blocks of granite, as claimed in the previous claims 1-7, **characterised in that** it has four braking devices (40) located close to the supports (49; 38; 39) of the mobile portal frame.

10. Machine for cutting blocks of granite, as claimed in claim 8, **characterised in that** the said braking devices (40) consist of cylinders on whose stem there is a disc (51) for clamping the sides of the said rack (35).

11. Machine for cutting blocks of granite, as claimed in one of claims 4 and 5, 7-10, when dependent on claim 4, **characterised in that** said beams (10; 11), in box-section steel, supporting the guide rails (8; 9) rest on plinths (19) or on a reinforced concrete wall (20).

12. Machine for cutting blocks of granite, as claimed in one of the previous claims, **characterised in that** it has a lead screw (44) on the two columns (6; 32) for moving the bridge (5; 27) on said vertical guide rails (21; 33); the said guide rails being adjustable on one side only.

13. Machine for cutting blocks of granite, as claimed in one of the previous claims, **characterised in that** the mobile portal frame consists of two side elements (7; 30) in box-section steel, joined, close to the supports, by a tubular body (22; 31) supporting the vertical columns (6; 32).

14. Machine for cutting blocks of granite, as claimed in one of the previous claims, **characterised in that** the assembly of disks is on a horizontal axis (2) for cutting the slices vertically and in depth.

15. Machine for cutting blocks of granite, as claimed in one of the previous claims 1-13, **characterised in that** it has the assembly of disks on a horizontal axis (27) of progressively increasing diameters, from a minimum to a maximum, for the vertical cutting of the top-side offcut material, and that it has a vertical-axis mandrel, for cutting off the said offcut material or slices at the base.

16. Plant for cutting blocks of granite, marble and stone in general, comprising at least a machine as claimed in claim 14, as a block cutter, and at least one machine as claimed in claim 15, as a trimming machine, **characterised in that** the machines slide on the same guide rails.

17. Plant for cutting blocks of granite, as claimed in the previous claim, **characterised by** an off-loading device for the slices and at least a pair of rails for trolleys to transport the blocks within the work area of said machines.

## Patentansprüche

1. Maschine zum Schneiden von Blöcken aus Granit, Marmor und Stein im allgemeinen mit ersten horizontalen an den Fundament befestigten Führungsschienen (8, 9), einem auf diesen Führungsschienen verfahrbaren mobilen Portalrahmen (7; 30), einer Vorrichtung (36, 37) um diesen entlang der Schienen zu bewegen, einem ein Schneidewerkzeug tragenden und quer zu der Richtung dieser Führungsschienen verfahrbaren Wagen (1; 25), **gekennzeichnet durch** eine Zusammenstellung von mehreren Diamantscheiben (2; 26), deren Schneidrichtung quer zu der der ersten Führungsschienen ist, **durch** mindestens zwei Bremsvorrichtungen (40) zum Abbremsen des Portalrahmens auf den Führungsschienen, **durch** zwei an dem Portalrahmen befestigte vertikale Säulen (6; 32) mit zweiten vertikalen Führungsschienen (21; 33) und **durch** eine Brücke (5; 27) deren Enden angepasst sind, um vertikal entlang der zweiten Führungsschienen zu verfahren, wohingegen der Wagen angepasst ist, um entlang der Brücke zu verfahren.

2. Maschine zum Schneiden von Blöcken aus Granit, wie in dem vorhergehenden Anspruch beansprucht, **dadurch gekennzeichnet, dass** die ersten Führungsschienen (8, 9) prismatische Führungen zum vertikalen Positionieren und zum Quer-Positionieren nur einer (8) von diesen haben.

3. Maschine zum Schneiden von Blöcken aus Granit, wie in dem vorhergehenden Anspruch beansprucht, **dadurch gekennzeichnet, dass** sie Gleitelemente (38; 49) hat, die den mobilen Portalrahmen (7; 30) auf den Führungen mit einer Antifriktonsschicht (48) trägt.

4. Maschine zum Schneiden von Blöcken aus Granit, wie in dem vorhergehenden Anspruch beansprucht, **dadurch gekennzeichnet, dass** die horizontalen Führungsschienen (8; 9) von zwei u-förmigen Schutzelementen eingeschlossen sind, das untere von diesen (12) an der jeweiligen Führungsschiene und am zugehörigen Tragbalken (10; 11) fest verankert ist.

5. Maschine zum Schneiden von Blöcken aus Granit, wie in dem vorhergehenden Anspruch beansprucht, **dadurch gekennzeichnet, dass** innerhalb des unteren Schutzelementes (12) ein Ölbad zum Schmieren und Schützen der Führungsschienen und der Tragelemente (38; 49) ist.

6. Maschine zum Schneiden von Blöcken aus Granit, wie in einem der Ansprüche 2, 3 beansprucht, **dadurch gekennzeichnet, dass** ein Quer-Positionieren durch Drehstifte (39) erreicht wird, die an den Seiten der einen (8) der Führungsschienen (8, 9) gelagert sind.

7. Maschine zum Schneiden von Blöcken aus Granit, wie im Anspruch 4 beansprucht, **dadurch gekennzeichnet, dass** er eine Längsverstärkungsplatte (47) zwischen der Führungsschiene und dem jeweiligen Tragbalken (10; 11 ) hat, an der auf jeder Seite des mobilen Portalrahmens (7; 30) eine mit mindestens einem Untersetzungsgetriebe (36) der Überspannungsvorrichtung kämmende Zahnstange (35) fest verankert ist.

8. Maschine zum Schneiden von Blöcken aus Granit, wie in dem vorhergehenden Anspruch beansprucht, **dadurch gekennzeichnet, dass** die Bremsvorrichtungen (40) so angeordnet sind, um an den Seiten der Zahnstange (35) zu arbeiten.

9. Maschine zum Schneiden von Blöcken aus Granit, wie in den vorhergehenden Ansprüchen 1 bis 7 beansprucht, **dadurch gekennzeichnet, dass** diese vier Bremsvorrichtungen (40) hat, die in der Nähe der Tragelemente (49; 38; 39) des mobilen Portalrahmens angeordnet sind.

10. Maschine zum Schneiden von Blöcken aus Granit, wie im Anspruch 8 beansprucht, **dadurch gekennzeichnet, dass** die Bremsvorrichtungen (40) aus Zylindern bestehen, an deren Kolbenstange eine Scheibe (51) zum Klemmen der Seiten der Zahnstange (35) ist.

11. Maschine zum Schneiden von Blöcken aus Granit, wie in einem der Ansprüche 4 und 5, 7 bis 10, wenn abhängig vom Anspruch 4 beansprucht, **dadurch gekennzeichnet, dass** die Balken (10; 11 ) aus Profilstahl mit Kastenquerschnitt die Führungsschienen (8; 9) tragen, die auf Mauersockein (19) oder auf einer Stahlbetonwand (20) ruhen.

12. Maschine zum Schneiden von Blöcken aus Granit, wie in einem der vorhergehenden Ansprüchen beansprucht, **dadurch gekennzeichnet, dass** diese zum Bewegen der Brücke (5; 27) auf den vertikalen Führungsschienen (21; 33) eine Verstellschraubenspindel (44) an den beiden Säulen (6; 32) hat und die Führungsschienen nur an einer Seite einstellbar sind.

13. Maschine zum Schneiden von Blöcken aus Granit, wie in einem der vorhergehenden Ansprüche beansprucht, **dadurch gekennzeichnet, dass** der mobile Portalrahmen aus zwei Seitenelementen (7; 30) aus Profilstahl mit Kastenquerschnitt besteht, die in der Nähe der Tragelemente durch einen Rohrkörper (22; 31) verbunden sind, der die vertikalen Säulen (6, 32) trägt.

14. Maschine zum Schneiden von Blöcken aus Granit, wie in einem der vorhergehenden Ansprüche beansprucht, **dadurch gekennzeichnet, dass** die Zusammenstellung der Scheiben zum Schneiden der Scheiben vertikal und in der Tiefe auf einer horizontalen Achse (2) ist.

15. Maschine zum Schneiden von Blöcken aus Granit, wie in einem der vorhergehenden Ansprüche 1 bis 13 beansprucht, **dadurch gekennzeichnet, dass** diese eine Zusammenstellung von Scheiben auf einer horizontalen Achse (27) mit von einem Minimum zu einem Maximum progressiv zunehmenden Durchmesser hat für ein vertikales Schneiden des oberseitigen abzuschneidenden Materials und dass diese eine Vertikalachsen-Frässspindei zum Abschneiden des abzuschneidenden Materials oder Scheiben an der Basis hat.

16. Anlage zum Schneiden von Blöcken aus Granit, Marmor und Stein im allgemeinen bestehend aus mindestens einer wie in Anspruch 14 beanspruchten Maschine als Blockschneider und mindestens einer wie in Anspruch 15 beanspruchten Maschine als eine Zuschneidemaschine, **dadurch gekennzeichnet, dass** die Maschinen auf den gleichen Führungsschienen gleiten.

17. Anlage zum Schneiden von Blöcken aus Granit, wie in dem vorhergehenden Anspruch beansprucht, **gekennzeichnet durch** eine Abtransportvorrichtung für die Scheiben und mindestens einen Paar Schienen für Fahrwagen zum Transportieren der Blöcke innerhalb des Arbeitsbereiches dieser Maschinen.

## Revendications

1. Machine pour découper des blocs de granite, de marbre et de pierre, en général, comprenant des premiers rails de guidage horizontaux (8, 9) fixés sur la fondation, un portique mobile (7 ; 30) roulant sur lesdits rails de guidage, un dispositif (36, 37) permettant de la déplacer le long des rails, un chariot (1 ; 25) portant un outil de coupe et pouvant se déplacer transversalement à la direction desdits rails de guidage, **caractérisée par** un ensemble de disques à diamants multiples (2 ; 26), dont la direction de coupe est transversale par rapport à celle des premiers rails de guidage, par au moins deux dispositifs de freinage (40) permettant de freiner ledit portique sur lesdits rails de guidage, par deux colonnes verticales (6 ; 32) montées sur le portique et possédant des seconds rails de guidage verticaux (21 ; 33), et par un pont (5 ; 27) dont les extrémités sont conçues pour se déplacer verticalement le long desdits seconds rails de guidage, grâce à quoi ledit chariot est conçu pour circuler le long dudit pont.

2. Machine pour découper des blocs de granite, selon la revendication précédente, **caractérisée en ce que** les premiers rails de guidage (8, 9) possèdent des guides prismatiques permettant le positionnement vertical et le positionnement transversal sur uniquement un seul de ceux-ci.

3. Machine pour découper des blocs de granite, selon la revendication précédente, **caractérisée en ce qu'**elle possède des éléments coulissants (38 ; 49) supportant le portique mobile (7 ; 30) sur les guides, avec une lame anti-friction (48).

4. Machine pour découper des blocs de granite, selon la revendication précédente, **caractérisée en ce que** lesdits rails de guidage horizontaux (8 ; 9) sont inclus dans deux dispositifs de protection en forme de U, le plus bas (12) étant ancré, de manière sûre, sur le rail de guidage relatif et sur une poutrelle support (10 ; 11) correspondante.

5. Machine pour découper des blocs de granite, selon la revendication précédente, **caractérisée en ce que**, à l'intérieur du dispositif de protection inférieur (12), se trouve un bain d'huile permettant de lubrifier et de protéger le rail de guidage et les supports (38 ; 49).

6. Machine pour découper des blocs de granite, selon la revendication 2 ou 3, **caractérisée en ce que** le positionnement transversal est obtenu au moyen de broches tournantes (39) qui appuient sur les côtés du dit un des rails de guidage (8, 9).

7. Machine pour découper des blocs de granite, selon la revendication 4, **caractérisée en ce qu'**elle possède une plaque de renforcement longitudinale (47), entre le rail de guidage et la poutrelle de support relative (10 ; 11), sur laquelle est ancrée, de manière rigide, une crémaillère (35) qui s'engrène sur au moins un engrenage réducteur (36) dudit dispositif traversant, de chaque côté dudit portique mobile (7 ; 30).

8. Machine pour découper des blocs de granite, selon la revendication précédente, **caractérisée en ce que** lesdits dispositifs de freinage (40) sont agencés sur les côtés de ladite crémaillère (35).

9. Machine pour découper des blocs de granite, selon les revendications précédentes 1 à 7, **caractérisée en ce qu'**elle possède quatre dispositifs de freinage (40) situés près des supports (49 ; 38 ; 39) du portique mobile.

10. Machine pour découper des blocs de granite, selon la revendication 8, **caractérisée en ce que** lesdits dispositifs de freinage (40) consistent en des vérins sur le fût desquels on trouve un disque (51) permettant de fixer par pincement les côtés de ladite crémaillère (35) .

11. Machine pour découper des blocs de granite, selon l'une des revendications 4 et 5, 7 à 10, lorsqu'elles sont dépendantes de la revendication 4, **caractérisée en ce que** lesdites poutrelles (10 ; 11) en acier de section rectangulaire, supportant les rails de guidage (8 ; 9) reposent sur des plinthes (19) ou sur un mur en béton armé (20).

12. Machine pour découper des blocs de granite, selon l'une des revendications précédentes, **caractérisée en ce qu'**elle possède une vis-mère (44) sur les deux colonnes (6 ; 32) afin de déplacer le pont (5 ; 27) sur lesdits rails de guidage verticaux (21 ; 33) ; lesdits rails de guidage pouvant être ajustés sur un seul côté, uniquement.

13. Machine pour découper des blocs de granite, selon l'une des revendications précédentes, **caractérisée en ce que** le portique mobile consiste en deux éléments latéraux (7 ; 30) en acier à section rectangulaire, réunis, près des supports, grâce à un corps tubulaire (22 ; 31) supportant les colonnes verticales (6 ; 32).

14. Machine pour découper des blocs de granite, selon l'une des revendications précédentes, **caractérisée en ce que** l'ensemble de disque se trouve sur un axe horizontal (2) afin de découper des tranches verticalement et en profondeur.

15. Machine pour découper des blocs de granite, selon l'une des revendications précédentes 1 à 13, **caractérisée en ce qu'**elle possède l'ensemble de disques sur un axe horizontal (27) de diamètres augmentant progressivement, d'un minimum à un maximum, pour le découpage vertical du matériau de côté de coupe, et **en ce qu'**elle possède un mandrin à axe vertical, pour le découpage dudit matériau de côté de coupe ou de tranches à la base.

16. Machine pour découper des blocs de granite, de marbre et de pierre, en général, comprenant au moins une machine, selon la revendication 14, comme découpeuse de blocs et au moins une machine, selon la revendication 15, comme ébarbeuse, **caractérisée en ce que** les machines coulissent sur les mêmes rails de guidage.

17. Machine pour découper des blocs de granite, selon la revendication précédente, **caractérisée par** un dispositif de déchargement pour les tranches, et au moins une paire de rails pour que des chariots porteurs transportent les blocs dans la zone de travail desdites machines.
